# EUROPEAN PATENT APPLICATION

(11) **EP 2 560 348 A2**
(43) Date of publication of application: **20.02.2013**
(21) Application number: 12158492.4
(22) Date of filing: 07.03.2012
(51) Int. Cl.: H04L 29/12, H05B 33/08

(54) **Automatic addressing method of a plurality of slaves in a master slave network**

(30) Priority: 19.08.2011 IN CH28432011
(71) Applicant: Schneider Electric Industries SAS, 92500 Rueil-Malmaison (FR)
(72) Inventor: Thirugnanasambandam Singaravelu, Manikandan, 560066 Bangalore (IN); Spinola, Federico, 40066 Pieve di Cento (BO) (IT); Nandeesh, Harsha, 560066 Bangalore (IN); Ponnam, Naresh, 560066 Bangalore (IN); Montaguti, Alberto, 40066 Pieve di Cento (BO) (IT)
(74) Representative: Mati, Silvia

(57) **Abstract**

The invention discloses an automatic method of assigning network address to a plurality of slaves connected in a master-slave network particularly in an emergency lighting installation. The automatic method assigns network address to the plurality of slaves based in one or more iterations. In an iteration, the method includes setting the plurality of slaves in commissioning mode by a master/control unit, generating a token by each of the slaves using a random number generation algorithm, determining a threshold by the master, responding by the slaves with the token matching the threshold, assigning a unique network address to the responding slave by the master in case of no collision among the slaves, increasing the threshold, and repeating the before-mentioned steps until all the slaves having token with no collision are assigned with the unique network address. The disclosed invention is simple to implement, requires no hardware change, and is scalable to any network size. The fully automatic method reduces time and manual labor significantly and eliminates error in assigning the network address in large network.

## Description

### FIELD OF THE INVENTION

The present invention generally relates to automatic addressing of the slaves in a master slave network. In particular, the present invention relates to automatic addressing of luminaries in an emergency lighting installation.

### BACKGROUND OF THE INVENTION

Presently in most countries building standards specify to include an emergency lighting installation. The emergency lighting installation guides people stranded inside a building towards exit during an emergency situation such as fire, smoke and other emergency situations. Typically, the emergency lighting installation includes a control unit and a number of luminaries connected to such control unit. In the emergency lighting installation, it is necessary to uniquely assign network address to each luminaries in order to establish communication with them. The communication may include exchange of information regarding different parameters of the luminaries with the control unit. Although the luminaries include some intelligence, however, in conventional cases the luminaries are assigned network addresses manually. The network address may be assigned through a rotary switch, a DIP switch or various other manual methods.

Typically, public buildings such as hospitals, theatres, and airports etc. span over a wide area and include an emergency lighting installation having large size and complicated structure. The method of assigning network address to each luminary manually in such a large luminary network involves a huge amount of labor and a great deal of time. In addition, the manual addressing method may introduce error in the luminary network. For example, the network address assigned to each luminary may not be unique and may lead to collision among the luminaries. Further, even if the repetition of address is identified, it is equally difficult to correct the repetition, as there exists no mechanism to locate the duplicate address easily.

In an approach to solve the problem of manual addressing a dedicated interface may be used to connect the luminaries to a luminary bus. However, the disadvantage in such case is all the luminaries need to support the additional interface, which might call for a complete new system with new set of luminaries. This may result in significant increase in cost.

Hence there is a need to provide a solution to obviate the above-mentioned disadvantages in assigning network address to luminaries connected in an emergency lighting installation, with little or no human intervention. Therefore, it is desirable to provide an improved method of automatically assigning network address to luminaries connected in a luminary network such as an emergency lighting installation.

### SUMMARY OF THE INVENTION

The main object of the present invention is to provide an improved method of automatically assigning network address to luminaries connected in an emergency lighting installation, which enables to reduce the manual effort and time for assigning network address significantly.

Another object of the present invention is to provide an improved method of automatically assigning network address to luminaries connected in an emergency lighting installation, which eliminates the error in assigning network address to the luminaries in a large luminary network.

Yet another object of the present invention is to provide an improved method of automatically assigning network address to luminaries connected in an emergency lighting installation, which is independent of any particular protocol stack on existing hardware for its functioning and requires no change in the existing hardware set up.

In order to achieve the above-mentioned objects the present invention discloses a method of assigning unique network address to a plurality of slaves automatically in a master-slave network based in one or more iterations. The method includes i) setting the plurality of slaves to commissioning mode by broadcasting a commission command by a master, ii) generating a token in an iteration by each of the plurality of slaves in the commissioning mode using a random number generation algorithm, iii) determining a threshold and broadcasting a corresponding threshold command by the master, iv) responding to the threshold command by the slaves with the token matching the threshold, v) assigning a unique network address to one of the plurality of slaves, having the token matching the threshold by the master in case of no collision among the slaves, vi) repeating the steps iii to v until the slaves having the token generated with no collision in the iteration matching the threshold determined by the master in such repeated steps are assigned with the unique network address, vii) switching the slaves, which have been assigned the unique network address in the iteration, to addressed mode from the commissioning mode by the master, and viii) repeating the one or more iterations for the steps of i to vii until each of the plurality of slaves is assigned with the unique network address.

In another embodiment, generating a token by each of the plurality of slaves in the commissioning mode further includes using a middle squared random number generation algorithm based on a unique serial number corresponding to each of the plurality of slaves. This further includes discarding the token of the previous iteration and re-generating a token using a modified random number generation algorithm.

In another embodiment, determining a threshold by the master further includes incrementing the threshold by a pre-determined value.

In another embodiment, responding to the threshold command by the slaves with the token matching the threshold further includes sending the unique serial number of the responding slaves to the master.

In yet another embodiment, assigning a unique network address to one of the plurality of slaves, having the token matching the threshold further includes sending an address command to the one of the plurality of slaves, having the token matching the threshold by the master, wherein the address command includes the assigned unique network address and the unique serial number of the one of the plurality of slaves, storing the assigned unique network address by the one of the plurality of slaves, and acknowledging to the master the completion of assigning the unique network address by the one of the plurality of slaves.

### BRIEF DESCRIPTION OF THE DRAWINGS

The above-mentioned and other features and other advantages of the invention will be better understood and will become more apparent by referring to the exemplary embodiments of the invention, as illustrated in the accompanying drawings, wherein
FIG. 1 schematically illustrates configuration of an emergency lighting installation of a building in accordance with one embodiment of the present invention;
FIG. 1a schematically illustrates configuration of a master-slave network in accordance with one embodiment of the present invention;
FIG. 2 schematically illustrates a simple master slave network according to one embodiment of the present invention;
FIG. 3 is a flowchart illustrating the steps performed by a master/control unit in a method of assigning network address automatically to luminaries connected in an emergency lighting installation according to one embodiment of the present invention;
FIG. 4 is a flowchart illustrating the steps performed by a slave/luminary in a method of assigning network address automatically to luminaries connected in an emergency lighting installation according to one embodiment of the present invention; and
FIG. 5 illustrates a random number generation algorithm used by the luminaries to generate token in the method of assigning network address automatically to the luminaries in an emergency lighting installation as shown in FIG. 4.

### DETAILED DESCRIPTION OF THE INVENTION

Reference will now be made to the exemplary embodiments of the invention, as illustrated in the accompanying drawings. Where ever possible same numerals will be used to refer to the same or like parts.

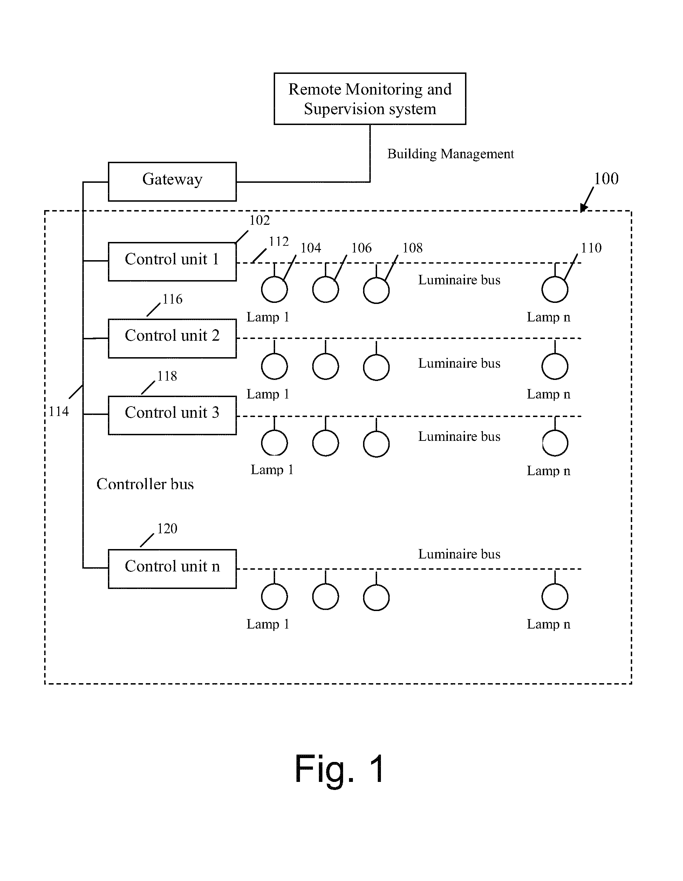

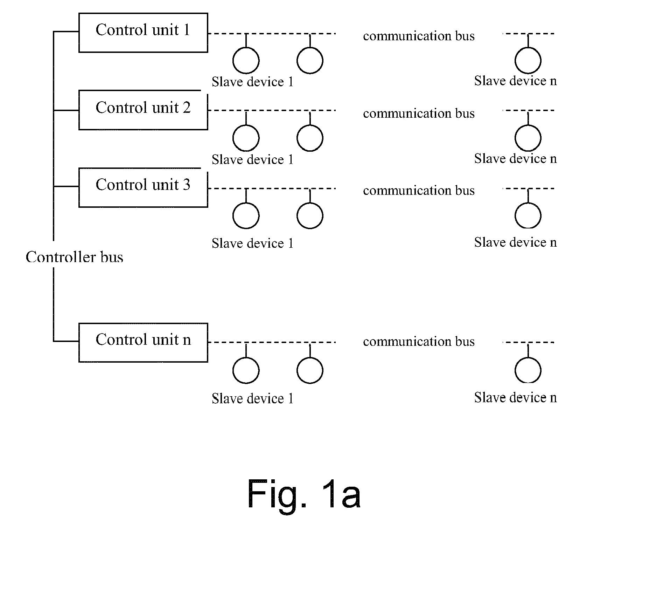

Disclosed herein is a method of automatically assigning network address to a plurality of slaves in a master-slave network (as shown in FIG. 1a) such as a luminary network, an automation set up, a metering set up and so forth. For example, such a luminary network may include an emergency lighting installation installed in a building having multiple control units and corresponding multiple luminaries. Likewise, such an automation set up and a metering set up may include plurality of control units and corresponding automation and metering devices respectively.

FIG. 1 schematically illustrates configuration of an emergency lighting installation 100 in accordance with one embodiment of the present invention. The emergency lighting installation 100 includes multiple control units such as102, 116, 118, and 120, a plurality of luminaries or lamps such as 104, 106, 108, 110, multiple luminary bus such as 112, and a controller bus 114. For example, the emergency lighting installation 100 may be installed in a public building such as a hospital, a theatre, an airport and so forth.

The control unit 102 monitors and controls the luminaries 104, 106, 108 and 110 as a master in the emergency lighting installation 100. The control unit 102 further assigns unique network address to the luminaries 104, 106, 108, and 110 so as to establish communication with them after installation. By establishing communication, the control unit 102 monitors different parameters of the luminaries 104, 106, 108, and 110.

The luminaries 104, 106, 108, and 110 may be connected in a multidrop network within the emergency lighting installation 100. The luminary bus 112 connects the luminaries 104, 106, 108, and 110 to the control unit 102. Examples of the luminaries include lamps, and ballasts, and the like. The luminaries 104, 106, 108, and 110 work as slaves in the emergency lighting installation 100 and receive control signals from the control unit 102. In an embodiment, the luminaries 104, 106, 108, and 110 are configured to include required intelligence to be connected in a normal system bus such as luminary bus 112, however, they are not configured to support any complex network protocol such as TCP/IP, and BACnet etc.

The multiple control units 116, 118, and 120 along with the control unit 102 divide the emergency lighting installation 100 into multiple rows and columns. Each row may include any number of luminaries. In an embodiment of the present invention each row is configured to include 100 luminaries. The concentrators 116, 118, and 120 are connected to the control unit 102 by the control bus 114.

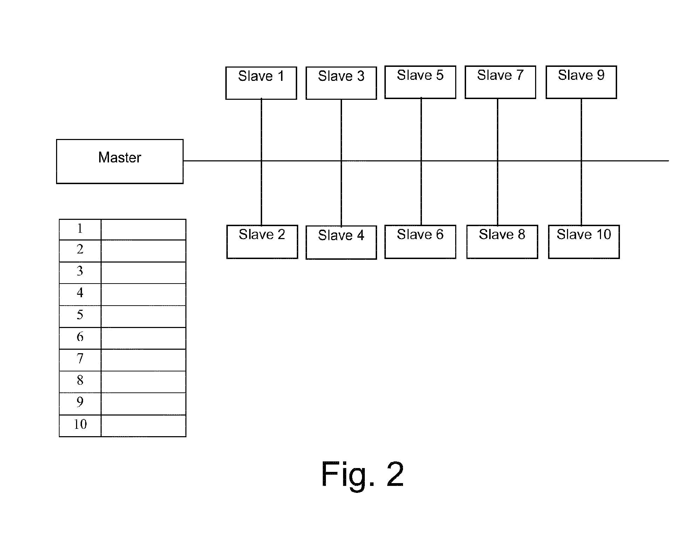

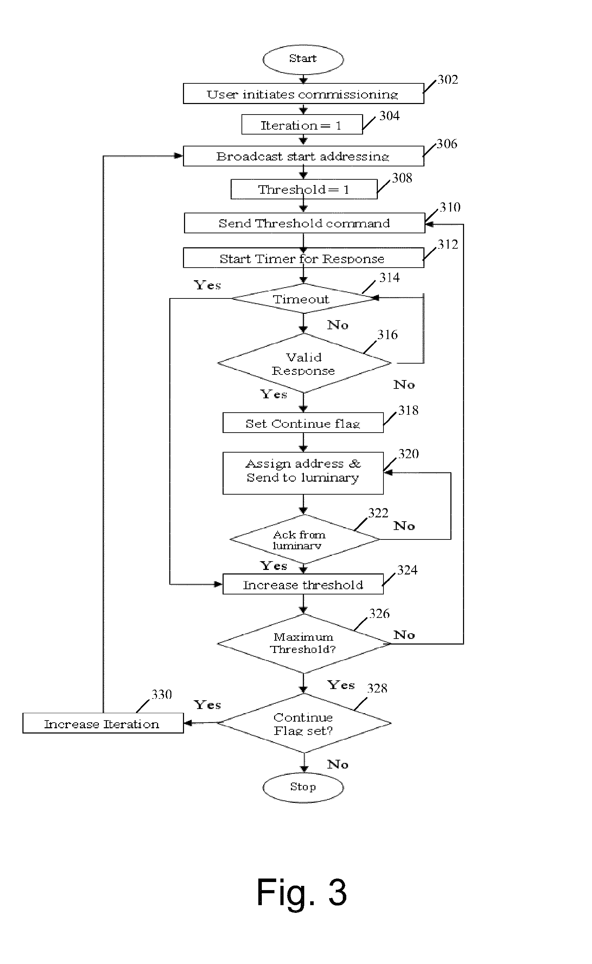

FIG. 2 schematically illustrates a simple master slave network according to one embodiment of the present invention wherein the master automatically assigns network address to each of the slaves connected to the network. Each row of emergency lighting installation 100 may be considered as such a simplified master slave network, where the control unit 102 assigns network address automatically to each luminary connected in the network. The detail method of assigning address to the luminaries 104, 106, 108, and 110 by the control unit 102 is explained with reference to FIG. 3-5.

FIG. 3 is a flowchart illustrating the steps performed by the control unit 102 in the method of assigning network address automatically to luminaries 104, 106, 108, and 110 connected in the emergency lighting installation 100 according to one embodiment of the present invention. Initially at step 302, an installer or user initiates the method of assigning network address to the luminaries 104, 106, 108, 110 by the control unit 102. The control unit 102 sets all the luminaries 104, 106,108, 110 in commissioning mode by sending a commission command. Then the control unit 102 starts first iteration at step 304. At step 306, the control unit 102 broadcasts start-addressing command to the luminaries 104, 106, 108, and 110 and sets a threshold to 1 at step 308. The value of the threshold, for example, may start from 1 and go up to 100 based on number of luminaries or devices at an increment of a pre-determined value, as 100 luminaries may be connected to the control unit 102 in the present embodiment. At step 310, the control unit 102 sends a threshold command containing the first threshold to the luminary bus 112 for the luminaries to respond and starts a timer at step 312. The control unit 102 checks for a valid response for a predetermined time period at step 314. Valid response may be received in case only one luminary generates a token, which matches with the first threshold and no other luminaries generates the same token. For example, in an exemplary embodiment luminary 104 generates a token that matches with the first threshold and luminaries 106, 108, and 110 generate different tokens. If no valid response is obtained from any of the luminaries, the control unit 102 goes back to step 314 and wait for the valid response. An invalid response may be received in two events, firstly if no luminary generates any token matching the first threshold or secondly if multiple luminaries generate the same token matching the first threshold. In the second case, the multiple luminaries create collision among them and all of them wait till next iteration for addressing. In case a valid response is received from a luminary at step 316, the control unit 102 sets a continue flag at step 318. Then the control unit 102 assigns a unique network address to the responding luminary, which is luminary 104 in this case, at step 320. The control unit 102 assigns network address from a sequential set of network addresses available to it. While assigning the address, the control unit 102 allocates next available network address to the responding luminary in a sequential manner. In another embodiment there may be different method of allocation of addresses other than sequential. At step 322, the control unit checks for an acknowledgement from the luminary 104. In case it does not receive any acknowledgement, the control unit 102 further returns to step 320 for re-assigning the unique network address and re-sending it to the luminary 104. When the control unit 102 receives the acknowledgement from the luminary 104 at step 324, it changes the mode of the luminary 104 from commissioning mode to the addressed mode. Any luminary in the addressed mode does not participate further in the addressing method. After that, the control unit 102 increases the threshold value by one at step 324 and checks whether a maximum threshold is reached at 326. In case the threshold value lies within the maximum threshold, the control unit 102 goes back to step 310 and repeat the steps until all the luminaries having unique token is assigned with a unique network address in the first iteration. In other case if the threshold value exceeds the maximum threshold, the control unit 102 checks for whether all the luminaries connected to the luminary bus 112 has been assigned a unique network address by checking the status of the continue flag. In case the continue flag is set, which indicates there still exists few luminaries unaddressed, the control unit 102 returns to step 306 for next iteration and broadcasts the start-addressing command to the remaining luminaries in the commissioning state. In case all the luminaries have been assigned a unique network address indicated by a reset continue flag, the control unit 102 stops the method of automatically assigning network address to the luminaries.

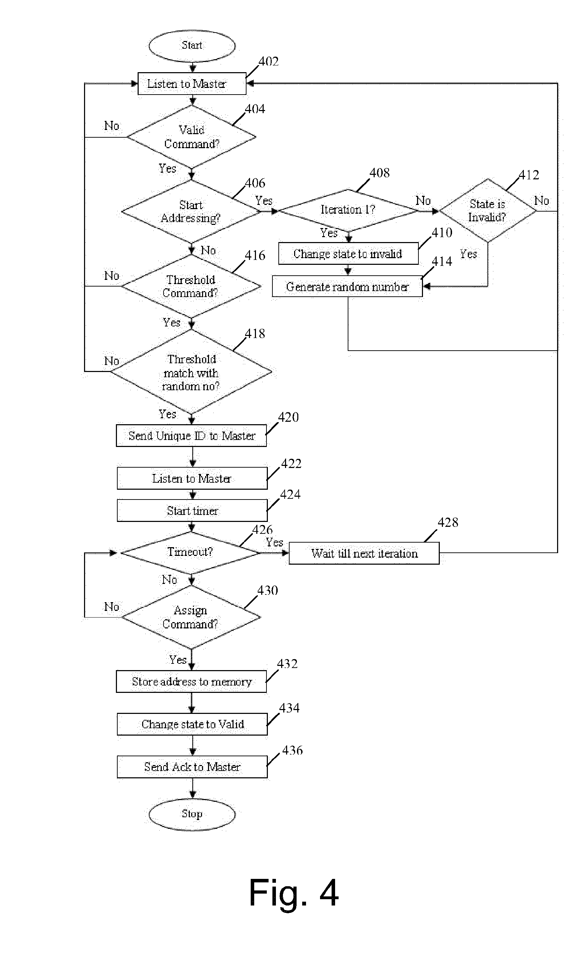

FIG. 4 is a flowchart illustrating the steps performed by a luminary in the method of assigning network address automatically to the luminaries 104, 106, 108, and 110 connected in the emergency lighting installation 100 according to one embodiment of the present invention. As the luminaries 104, 106, 108, and 110 are similar in structure and configuration, similar steps are performed by them in the method of assigning network address. Hence, the luminary 104 may be used to represent the other luminaries 106, 108, and 110 connected to the control unit 102. Initially at step 402, the luminary 104 listens to the control unit 102 for any command. If the luminary 104 receives any valid command from the control unit 102 at step 404, it initiates the commissioning mode and starts the method of addressing at step 406. In case the luminary 104 receives no valid response it returns to step 402 for listening to the control unit 102. In the commissioning mode, the luminary 104 first checks the iteration number at step 408. In case of first iteration, the luminary 104 changes the state to invalid at step 410 and generates a random number referred as token at step 414. In an embodiment, the luminary 104 uses middle squared random number generation algorithm to generate the token. In other embodiments, the token may be generated by other random number generation algorithms. However, middle squared random number generation algorithm is found to be more effective in generating numbers, which are more random. In case of other iteration than the first, the luminary 104 checks whether it is in a valid state at step 412. For an invalid state, the luminary 104 generates the token for the other iterations at step 414. For each iteration, the luminary 104 does little tweaking in the random number generation algorithm to generate different numbers every time. For example, we assume this to be the first iteration. After the token is generated, the luminary again returns to step 402 for listening the control unit 102. In case the luminary 104 receives a threshold command at step 416, it checks whether the token matches with the first threshold at step 418. In case the luminary does not receive any threshold command or the token does not match with the first threshold, it goes back to step 402 for listening to the control unit 102. If the token of 104 matches with the first threshold, the luminary 104 sends its unique serial number to the control unit 102 at step 420 and start listening to the control unit 102 for any command at step 422. The unique serial number may be stored in a flash memory or an EEPROM of the luminary 104. For listening to the control unit 102, the luminary 104 starts a timer at step 424 for a predetermined time period. In case the time period is over, the luminary 104 waits till the next iteration for being assigned with a unique network address at step 428. In case the luminary 104 receives an address command containing the unique network address from the control unit 102 at step 430, the luminary 104 stores the unique network address to its memory such as a flash or an EEPROM at step 432. Finally after storing the unique network address, the luminary 104 changes state to valid at step 434 and sends the acknowledgement to the control unit 102 that it has successfully acquired the unique network address and stored into the memory at step 436.

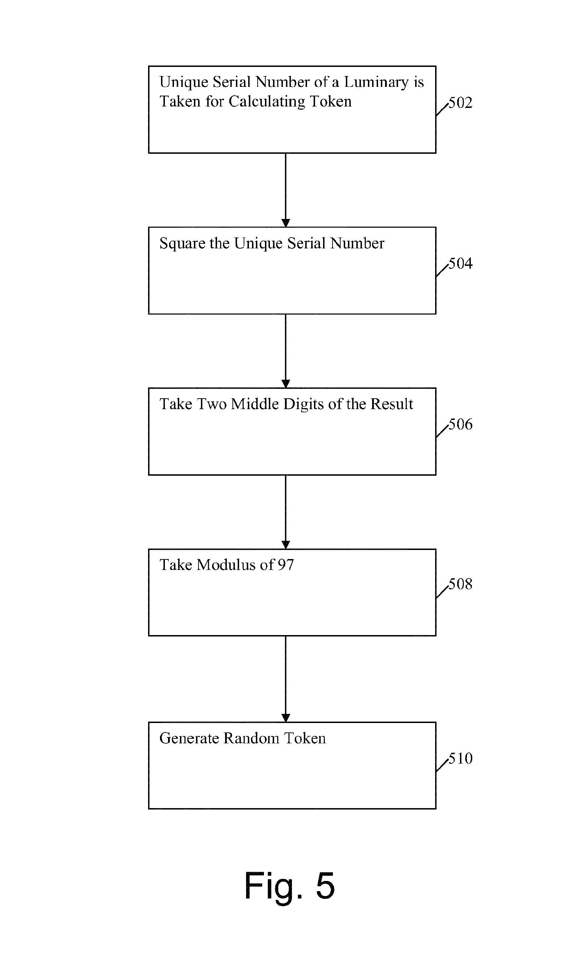

FIG. 5 illustrates the random number generation algorithm used by the luminaries such as 104, 106, 108, and 110 to generate the token in the method of assigning network address automatically to the luminaries in the emergency lighting installation 100 as shown in FIG. 4. In the present embodiment the luminaries 104, 106, 108, and 110 use the middle squared random number generation algorithm to generate the token. For every iterations the luminaries 104, 106, 108, and 110 incorporate little changes in the random number algorithm so as to generate different token every time. Each luminary includes a unique serial number stored in its memory. At step 502, each luminary, for example luminary 104, takes its own unique serial number for calculating the token. At step 504, the unique serial number is squared. The middle two digits are taken at step 506 for further calculation. At step 508, modulus of 97 is calculated from the middle two digits of the squared number. By taking the modulus of 97 a random number may be generated at step 510 as the token. In the present embodiment, 100 luminaries are connected to the control unit 102, therefore as a nearest prime number 97 is chosen for taking modulus. As mentioned earlier, every time the luminaries 104, 106, 108, 110 incorporates little tweaking in the random number generation algorithm. For example, in the second iteration, at step 502, the middle two digits of the unique serial number is replaced with the sum of the digits of the unique serial number and rest of the calculation is carried out on the newly formed number in the similar manner.

It is to be understood by a person of ordinary skill in the art that various modifications and variations may be made without departing from the scope and spirit of the present invention. Therefore, it is intended that the present invention covers such modifications and variations provided they come within the ambit of the appended claims and their equivalents.

## Claims

1. A method of assigning unique network address to a plurality of slaves automatically in a master-slave network based in one or more iterations comprising:
i) setting the plurality of slaves to commissioning mode by broadcasting a commission command by a master;
ii) generating a token in an iteration by each of the plurality of slaves in the commissioning mode using a random number generation algorithm;
iii) determining a threshold and broadcasting a threshold command corresponding thereto by the master;
iv) responding to the threshold command by the slaves with the token matching the threshold;
v) assigning a unique network address to one of the plurality of slaves, having the token matching the threshold by the master in case of no collision among the slaves;
vi) repeating the steps iii to v until the slaves having the token generated in the iteration with no collision matching the threshold determined by the master in such repeated steps are assigned with the unique network address;
vii) switching the slaves to addressed mode from the commissioning mode after the unique network address has been assigned thereto in the iteration by the master; and
viii) repeating the one or more iterations for the steps of i to vii until each of the plurality of slaves is assigned with the unique network address.

2. The method of assigning unique network address according to claim 1, wherein generating a token by each of the plurality of slaves in the commissioning mode further comprising using a middle squared random number generation algorithm based on a unique serial number corresponding to each of the plurality of slaves.

3. The method of assigning unique network address according to claim 1, wherein generating a token by each of the plurality of slaves in commissioning mode further comprising:
discarding the token of the previous iteration; and
re-generating a token using a modified random number generation algorithm.

4. The method of assigning unique network address according to claim 1, wherein determining a threshold by the master further comprising incrementing the threshold by a pre-determined value.

5. The method of assigning unique network address according to claim 2, wherein responding to the threshold command by the slaves with the token matching the threshold further comprising sending the unique serial number of the responding slaves to the master.

6. The method of assigning unique network address according to claim 2, wherein assigning a unique network address to one of the plurality of slaves, having the token matching the threshold further comprising:
sending an address command to the one of the plurality of slaves, having the token matching the threshold by the master, wherein the address command includes the assigned unique network address and the unique serial number of the one of the plurality of slaves;
storing the assigned unique network address by the one of the plurality of slaves; and
acknowledging to the master the completion of assigning the unique network address by the one of the plurality of slaves.

7. The method of assigning unique network address according to claim 1, wherein the master-slave network comprises an emergency lighting installation including a control unit and a plurality of luminaries.

8. The method of assigning unique network address according to claim 1, wherein the master-slave network comprises an automation setup including a control unit and a plurality of automation devices.

9. The method of assigning unique network address according to claim 1, wherein the master-slave network comprises a power metering setup including a control unit and a plurality of metering devices.
